Europäisches Patentamt

European Patent Office

Office européen des brevets

(11) Veröffentlichungsnummer: **0 406 525 A2**

# (12) EUROPÄISCHE PATENTANMELDUNG

(21) Anmeldenummer: 90105645.7

(22) Anmeldetag: 24.03.90

(51) Int. Cl.⁵: **H05K 5/00, G06F 1/16**

(30) Priorität: 05.07.89 DE 8908333 U

(43) Veröffentlichungstag der Anmeldung:
**09.01.91 Patentblatt 91/02**

(84) Benannte Vertragsstaaten:
**AT BE CH DE DK ES FR GB GR IT LI LU NL SE**

(71) Anmelder: **Deutsche Telephonwerke und Kabelindustrie Aktiengesellschaft Wrangelstrasse 100 D-1000 Berlin 36(DE)**

(72) Erfinder: **Klingbeil, Manfred Talberger Strasse 12m D-1000 Berlin 47(DE)**
Erfinder: **Krispin, Harro Beyschlagstrasse 31d D-1000 Berlin 27(DE)**
Erfinder: **Massmann, Manfred Hindenburgdamm 107 D-1000 Berlin 45(DE)**
Erfinder: **Pütz, Peter Alt-Tempelhof 23 D-1000 Berlin 42(DE)**

(54) **Betriebsdaten-Erfassungsgerät.**

(57) Ein Betriebsdaten-Erfassungsgerät ist durch seine besondere konstruktive Ausgestaltung sowohl als Tischgerät als auch als Wandgerät einsetzbar. Hierzu ist lediglich das Chassis des Gerätes um 180° versetzt im Gehäuse, das auch Wandbefestigungsvorrichtungen aufnehmen kann, einzusetzen.

FIG 1

EP 0 406 525 A2

# BETRIEBSDATEN-ERFASSUNGSGERÄT

Die Erfindung bezieht sich auf ein Gehäuse für Betriebsdaten-Erfassungsgeräte, die als Wand- und als Tischgeräte einsetzbar sind.

Betriebsdaten-Erfassungsgeräte werden vorzugsweise in Dienstleistungsbetrieben, z. B. des Kraftfahrzeuggewerbes, eingesetzt, zur Zeiterfassung, Zugangskontrolle, Personal-sowie Maschinen-Datenspeicherung.

Da derartige Betriebsdaten-Erfassungsgeräte bevorzugt im Werkstattbereich installiert werden, ist auf deren Zuverlässigkeit auch unter erschwerten Bedingungen größte Aufmerksamkeit zu widmen und der Aufwand für die notwendige Service-Zugänglichkeit gering zu halten.

Der Erfindung lag die Aufgabe zugrunde, ein Gehäuse für Betriebsdaten-Erfassungsgeräte zu schaffen, das einen servicefreundlichen Zugang gestattet und sich ohne größere Umbaumaßnahmen von einem Tischgerät in ein Wandgerät oder umgekehrt umrüsten läßt.

Diese Aufgabe ist durch die Erfindung, wie sie im Kennzeichnungsteil des ersten Schutzanspruches dargestellt ist, gelöst.

Anhand einer aus vier Figuren bestehenden Zeichnung wird die Erfindung nachfolgend beschrieben. Es zeigt die

Fig. 1 eine Explosionsdarstellung der Tischgeräteausführung, die

Fig. 2 eine Seitensicht der Wandausführung, die

Fig. 3 eine perspektivische Ansicht der Wandausführung und die

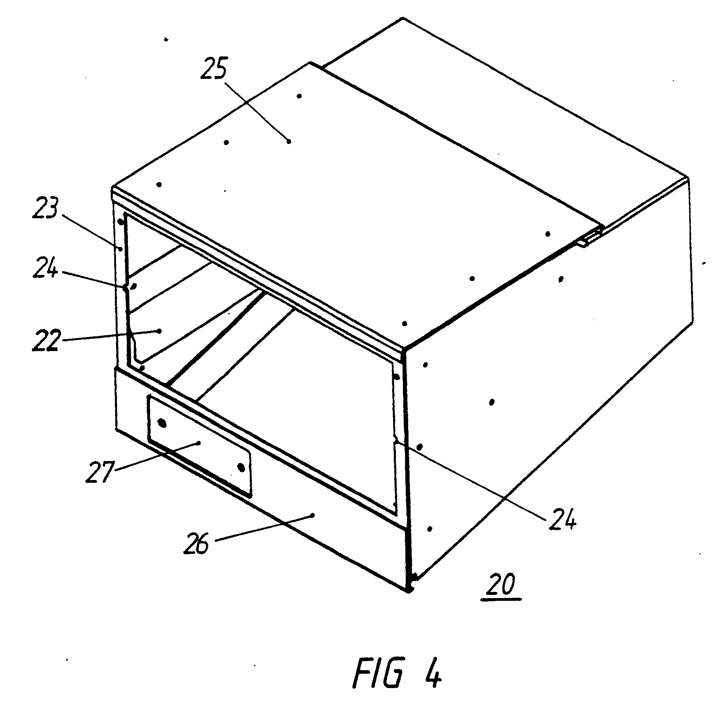

Fig. 4 eine Gehäuseausführung in perspektivischer Sicht.

Das Betriebsdaten-Erfassungsgerät besteht aus einem Gehäuse (20) und einem Chassis (10), wobei das Chassis (10) die gesamten elektrischen und elektronischen Baugruppen, einen Monitor (11) und die Bedienungseinheit (12) umfaßt. Das Chassis (10) ist achssymmetrisch gestaltet und stellt eine in sich geschlossene Einheit dar, deren Funktionsprüfung im Fertigungsdurchlauf dadurch vereinfacht ist. Außerdem trägt das Chassis (10) sämtliche Steckverbindungen für die Externverdrahtung.

Das Gehäuse (20) dient ausschließlich der Verkleidung und der Halterung des Chassis (10). Es ist aus Stahlblech geformt, dessen einzelne Teile verschweißt sind. Eine rückwärtige Abdeckung (21) weist Durchbrüche für die Anschlußkabel auf. Die Seitenwände des Gehäuses (20) tragen Führungsschienen (22) für das Chassis (10). Das Frontblech (23) ist mit einem Ausschnitt zum Einführen des Chassis (10) versehen. Das Frontblech (23) weist zwei Führungskerben (24) zur Justierung des Chassis (10) auf, wobei in den Figuren nicht gezeigte Führungsstifte an der Rückseite der Frontplatte des Chassis (10) angeordnet sind. Das Frontblech (23) dient somit gleichzeitig als Anschlag für die Frontplatte des Chassis (10).

Zwei Winkel (25, 26) umgreifen das Frontblech (23), um bei eingesetztem Chassis (10) eine durchgehende Oberfläche der Bedienungsseite zu erreichen. Der breitere Winkel (26) ist mit einem Durchbruch (27) versehen, der der Aufnahme eines Schildes mit Bedienungshinweisen dient.

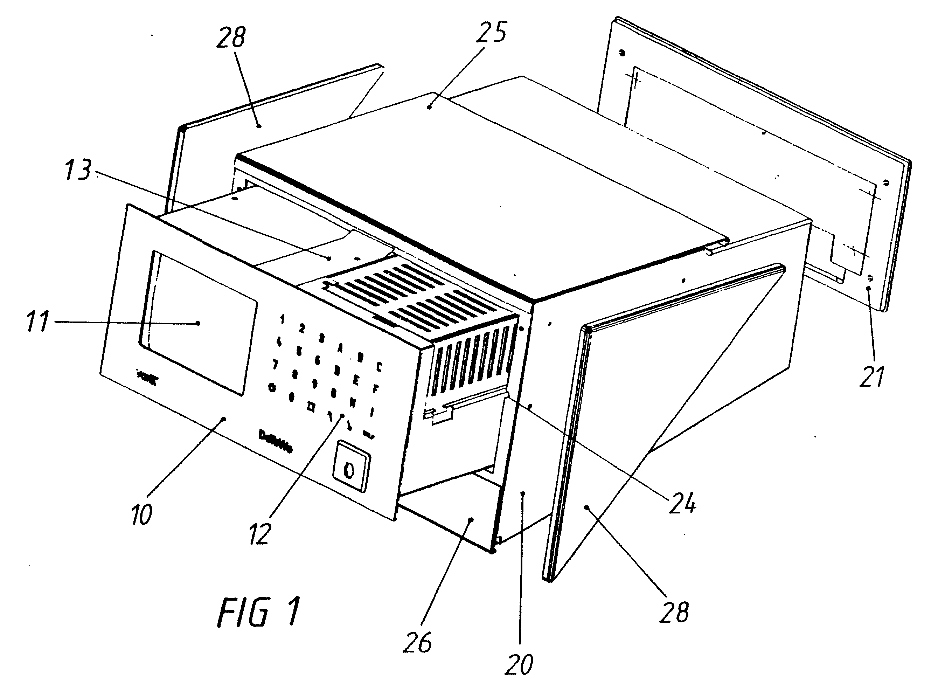

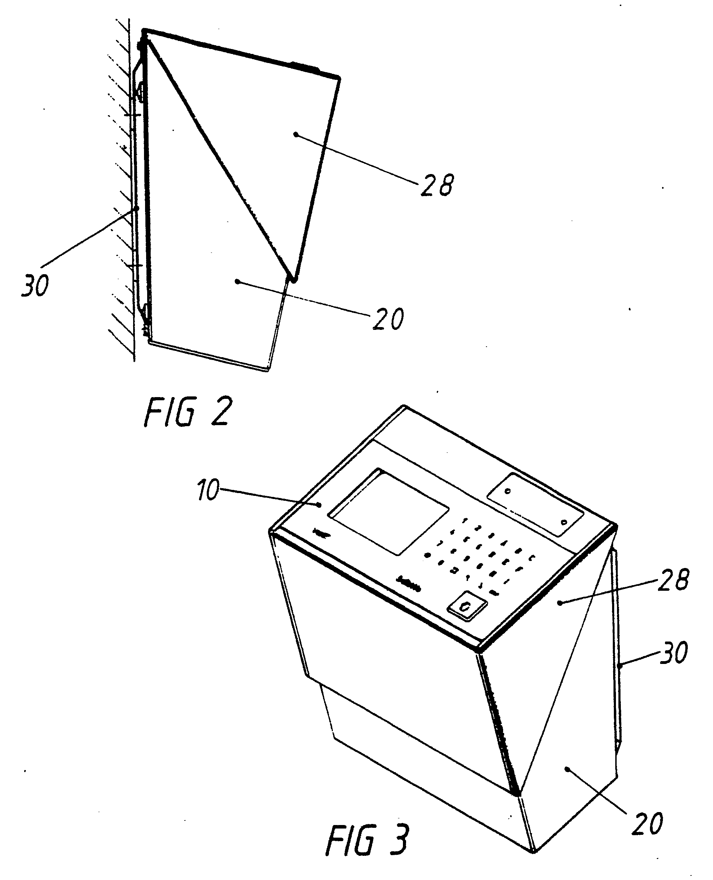

Das Betriebsdaten-Erfassungsgerät kann als Standgerät (Fig. 1) oder als Wandgerät (Fig. 2, 3) eingesetzt werden. Zur Umrüstung ist lediglich das Chassis und die rückwärtige Abdeckung um 180° zu drehen, eine Wandhalterung (30) zu montieren und das Gehäuse (20) mittels vier Schraubverbindungen anstelle der Tischfüße an der Wandhalterung (30) zu befestigen. Die Ablese- und Bedienungsbedingungen bleiben bei beiden Ausführungen identisch.

Weiterhin dienen die Befestigungsmittel am Bodenblech des Gehäuses (20) für die Tischfüße oder die Wandhalterung (30) auch der Befestigung eines Sockels, durch den bei Bedarf der Neigungswinkel der Tischausführung geändert werden kann.

Zwei dreieckförmige Seitenteile (28) aus Kunststoff verdecken die seitlichen Kanten der Winkel (25, 26) und der Frontplatte des Chassis (10).

Das Chassis (10) trägt eine Blattfeder (13). Die Blattfeder (13) dient im Servicefall dem Abstützen des Chassis (10) im teilweise aus dem Gehäuse (20) herausgezogenen Zustand. Dabei stützt sich die Blattfeder (13) auf den Rand des Frontbleches (23) ab.

## Ansprüche

1. Betriebsdaten-Erfassungsgerät, das aus einem Chassis und einem Gehäuse zusammengesetzt ist, welches als Tisch-und als Wandgerät einsetzbar ist, dadurch gekennzeichnet, daß das Frontblech (23) des aus Stahlblech geformten Gehäuses (20) mit einem Ausschnitt versehen ist, der zwei Führungskerben (24) aufweist, durch die das Chassis (10) mittels Führungsstiften im Gehäuse (10) justiert wird und daß das Chassis (10) für den Einsatz als Tisch-oder Wandgerät um 180° gedreht im gleichen Ausschnitt des Frontbleches (23) einsetzbar ist.

2. Betriebsdaten-Erfassungsgerät nach Anspruch 1, dadurch gekennzeichnet, daß das Frontblech (23) als Anschlag für die Frontplatte des Chassis (10) dient.

3. Betriebsdaten-Erfassungsgerät nach Anspruch 1, dadurch gekennzeichnet, daß das Gehäuse (20) Führungsschienen (22) an den Innenseiten der Seitenwände trägt und mit einer um 180° drehbaren Abdeckung (21) aus Kunststoff versehen ist.

4. Betriebsdaten-Erfassungsgerät nach Anspruch 1, dadurch gekennzeichnet, daß das Frontblech (23) des Gehäuses (20) von den Schenkeln zweier Winkel (25, 26) teilweise abgedeckt ist.

5. Betriebsdaten-Erfassungsgerät nach Anspruch 4, dadurch gekennzeichnet, daß der breitere Winkel (26) mit einem Durchbruch (27) zur Aufnahme eines Hinweisschildes versehen ist.

6. Betriebsdaten-Erfassungsgerät nach Anspruch 1, dadurch gekennzeichnet, daß das Chassis (10) eine Blattfeder (13) zur Abstützung des Chassis (10) am Gehäuse (20) im Service-Zustand trägt.

7. Betriebsdaten-Erfassungsgerät nach Anspruch 1, dadurch gekennzeichnet, daß das Gehäuse (10) an der Bodenplatte Befestigungsmittel aufweist, die nach Bedarf Tischfüße, eine Wandhalterung (30) oder einen zusätzlichen Sockel halten.

8. Betriebsdaten-Erfassungsgerät nach Anspruch 1, 2 und 4, dadurch gekennzeichnet, daß dreieckförmige Seitenteile (28) aus Kunststoff der seitlichen Abdeckung der Kanten der Winkel (25, 26) und der der Frontplatte des Chassis (10) dienen.

FIG 1

FIG 2

FIG 3

FIG 4